(19) Europäisches Patentamt / European Patent Office / Office européen des brevets

(11) **EP 3 338 382 B1**

(12) **EUROPEAN PATENT SPECIFICATION**

(45) Date of publication and mention
of the grant of the patent:
**31.03.2021 Bulletin 2021/13**

(51) Int Cl.:
*H04L 25/03* *(2006.01)*   *H04B 10/61* *(2013.01)*

(21) Application number: **15770494.1**

(22) Date of filing: **22.09.2015**

(86) International application number:
**PCT/EP2015/071728**

(87) International publication number:
**WO 2017/050352 (30.03.2017 Gazette 2017/13)**

(54) **AN EQUALIZER FOR A COMMUNICATION RECEIVER**

ENTZERRER FÜR EINEN KOMMUNIKATIONSEMPFÄNGER

ÉGALISEUR POUR RÉCEPTEUR DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.06.2018 Bulletin 2018/26**

(73) Proprietor: **Huawei Technologies Co., Ltd.
Longgang District
Shenzhen, Guangdong 518129 (CN)**

(72) Inventor: **STOJANOVIC, Nebojsa
80992 Munich (DE)**

(74) Representative: **Gill Jennings & Every LLP
The Broadgate Tower
20 Primrose Street
London EC2A 2ES (GB)**

(56) References cited:
**EP-A2- 0 632 623**   **EP-A2- 1 972 054**
**US-A1- 2011 305 270**

• **DZUNG D ED - INSTITUTE OF ELECTRICAL AND
ELECTRONICS ENGINEERS: "Error probability
of MLSE equalization using imperfect channel
measurements", COMMUNICATIONS - RISING
TO THE HEIGHTS. DENVER, JUNE 23 - 26, 1991;
[PROCEEDINGS OF THE INTERNATIONAL
CONFERENCE ON COMMUNICATIONS], NEW
YORK, IEEE, US, vol. -, 23 June 1991 (1991-06-23),
pages 558-562, XP010044158, DOI:
10.1109/ICC.1991.162426 ISBN:
978-0-7803-0006-4**

**Description**

TECHNICAL FIELD

The present invention relates to an equalizer for a communication receiver and a method of operating such an equalizer. In particular, the present invention relates to an equalizer for a communication receiver for an optical communication network and a method of operating such an equalizer.

BACKGROUND

Most 10Gb/s optical transmission systems using the third window for transmitting data are deployed in dispersion compensated links. Chromatic dispersion in the third window (wavelengths around 1550 nm) is compensated using dispersion compensating fibers (DCF) that have a dispersion sign that is opposition to the one of the fibers. Standard optical fibers have dispersion coefficients close to 16ps/(nm.km). DCFs are normally shorter than one optical span (~80km) and have a higher dispersion coefficient. Using DCFs can cause some negative effects, such as a higher noise, nonlinear effects as well as an increased power consumption.

In recent years, 40 and 100Gb/s coherent systems have been deployed without DCFs. Because of a coherent detection and the linear nature of the chromatic dispersion, it is possible to effectively compensate the chromatic dispersion using enhanced digital signal processing (DSP). It is likely that in a lot of future networks no DCF at all will be used. However, coherent transceivers/transponders are still very expensive. In short links without DCFs it is advantageous to use cheaper techniques to transmit high baud rate data. The main problem in such systems is chromatic dispersion.

In optical links without dispersion compensation fibers, a communication signal suffering from chromatic dispersion (CD) and polarization mode dispersion (PMD) must be equalized at the receiver side. Often the equalizer of a conventional receiver comprises a timing recovery block for sampling the received signal at a specific sampling phase within one unit interval (UI). This sampling phase is usually suboptimal or may even provide extremely bad performance.

Thus, there is a need for an improved equalizer and an improved method for operating such an equalizer, in particular an improved equalizer and an improved method for operating such an equalizer allowing for optimizing the sampling phase.

US 2011/0305270 relates to methods for obtaining a set of path metrics and equalizer for a receiver for digital data.

SUMMARY

It is an objective of the invention to provide an improved equalizer and an improved method for operating such an equalizer, in particular an improved equalizer and an improved method for operating such an equalizer allowing for optimizing the sampling phase.

This objective is achieved by the subject matter of the independent claims. Further implementation forms are provided in the dependent claims, the description and the figures.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be full formed by eternal entities is not reflected in the description of a specific detailed element of that entity which performs that specific step of functionality, it should be clear for a skilled person that these methods and functionalities can be implemented in respective software or hardware elements, or any kind of combination thereof.

LIST OF ABBREVIATIONS

DCF      dispersion compensating fiber
DSP      digital signal processing
CD       chromatic dispersion
UI       unit interval
PMD      polarization mode dispersion
BSPE     best sampling phase estimation
SBSPE    second best sampling phase estimation

CM   channel modeler

In one embodiment, the first parameter of each sampling phase of the first plurality of sampling phases are determined on the basis of the following equation.

$$BSPE^2 = BSPE^{A,B} = \frac{\sigma_{\mu,A}^2 + \sigma_{\mu,B}^2}{\sigma_A^2 + \sigma_B^2}\left(a(K_1^A + K_1^B) + b(K_2^A + K_2^B)\right), \ 0 \le a,b \le 1,$$

$$K_1^W = \overline{\mu(H_{11}^W)} - \overline{\mu(H_{00}^W)},$$

$$K_2^W = \overline{\mu(H_1^W)} - \overline{\mu(H_0^W)},$$

$$W = A, B,$$

and

$$\sigma_\mu^2 = \frac{1}{2L}\sum_{i=1}^{2L}(\mu_i - \bar{\mu})^2,$$

wherein $BSPE^2$ denotes the first parameter, $\sigma_{\mu,A}^2$ denotes the variance of the mean values $\mu_i$ of the plurality of histograms defining the plurality of adaptable branch metrics for the samples A, $\sigma_{\mu,B}^2$ denotes the variance of the mean values $\mu_i$ of the plurality of histograms defining the plurality of adaptable branch metrics for the samples B, L denotes the number of states of the maximum likelihood sequence estimator and wherein $H_1$, $H_0$, $H_{11}$, $H_{00}$ and $H_{01}$ define a metric set with $H_1$ all branches decoding 1, $H_0$ all branches decoding 0, $H_{11}$ all branches with three ones in the middle, $H_{00}$ all branches with three zeros in the middle and $H_{01}$ all branches with three zeros or three ones in the middle.

In another possible implementation form of the first aspect of the invention as such the target sampling phase estimator is configured to determine for each sampling phase of the first plurality of sampling phases the first parameter on the basis of the plurality of adaptable branch metrics using the same communication channel model.

In another possible implementation form of the first aspect of the invention the equalizer comprises an interpolator configured to interpolate the digital communication signal between sampling points.

In another possible implementation form of the first aspect of the invention the target sampling phase estimator is further configured during a second target sampling phase estimation stage to determine for each sampling phase of a second plurality of sampling phases a second parameter on the basis of a plurality of error events of the maximum likelihood sequence estimator and to estimate a second target sampling phase on the basis of the plurality of second parameters, wherein the sampling phase adjuster is further configured to adjust the sampling phase to the second target sampling phase.

In another possible implementation form of the above implementation form of the first aspect of the invention the sampling phases of the second plurality of sampling phases are located in the vicinity of the first target sampling phase, wherein the difference between each sampling phase of the second plurality of sampling phases and the first target sampling phase is smaller than a sampling phase difference threshold.

In another possible implementation form of the invention the target sampling phase estimator is configured to estimate the second target sampling phase on the basis of a plurality of error events of the maximum likelihood sequence estimator having an error probability larger than a predefined probability threshold.

In another possible implementation of the invention the plurality of error events comprise single error events, double error events and/or triple error events.

In another possible implementation form of the invention the digital communication signal is sampled with a sampling rate of one sample per symbol, wherein the target sampling phase estimator is configured to estimate during the second target sampling phase estimation stage the second target sampling phase on the basis of the plurality of second parameters by determining a sampling phase for which a second parameter of the plurality of second parameters has a maximum value and by determining the second parameter for each sampling phase of the second plurality of sampling phases on the basis of the following equations:

$$SBSPE_i = |E_i(1)||E_i(2)||E_i(3)|, \; i = 1,2,$$

$$E_1 = sum\left(log \cdot erfc\left(\frac{Q_1}{\sqrt{2}}\right)\right), E_2 = sum\left(log \cdot erfc\left(\frac{Q_{min}}{\sqrt{2}}\right)\right), Q_{min} = \min(Q_2, Q_3),$$

and

$$Q_1 = \frac{abs(\mu(C) - \mu(\underline{C}))}{\sigma(C) + \sigma(\underline{C})}, Q_2 = \frac{abs(\mu(C) - \mu(\underline{C}))}{2\sigma(C)}, Q_3 = \frac{abs(\mu(C) - \mu(\underline{C}))}{2\sigma(\underline{C})},$$

wherein $SBSPE_i$ denotes the second parameter, $E_1$ and $E_2$ denote two alternative error event estimation functions, and $C$ and $\underline{C}$ denote vectors defining competing error events.

In another possible implementation form of the invention the digital communication signal is sampled with a sampling rate of two samples per symbol, wherein the target sampling phase estimator is configured to estimate during the second target sampling phase estimation stage the second target sampling phase on the basis of the plurality of second parameters by determining a sampling phase for which a second parameter of the plurality of second parameters has a maximum value and by determining the second parameter for each sampling phase of the second plurality of sampling phases on the basis of the following equations:

$$SBSPE_i = \prod_{j=1}^{n}|E_i(p_j)|, i = 1,2,$$

$$E_1 = sum\left(log \cdot erfc\left(\frac{Q_1}{\sqrt{2}}\right)\right), E_2 = sum\left(log \cdot erfc\left(\frac{Q_{min}}{\sqrt{2}}\right)\right), Q_{min} = \min\left(Q_2^A, Q_3^A, Q_2^B, Q_3^B\right),$$

and

$$Q_1 = \frac{abs(\mu(C) - \mu(\underline{C}))}{\sigma(C) + \sigma(\underline{C})}, Q_2 = \frac{abs(\mu(C) - \mu(\underline{C}))}{2\sigma(C)}, Q_3 = \frac{abs(\mu(C) - \mu(\underline{C}))}{2\sigma(\underline{C})},$$

wherein $SBSPE_i$ denotes the second parameter, $E_1$ and $E_2$ denote two alternative error event estimation functions, and $C$ and $\underline{C}$ denote vectors defining competing error events.

According to a second aspect the invention relates to a method of operating an equalizer for a communication receiver configured to receive a digital communication signal over a communication channel, wherein the digital communication signal is sampled with a sampling phase, i.e. with a sampling signal defined by a sampling phase. The method comprises the steps as defined in claim 10.

The method according to the second aspect of the invention can be performed by the equalizer according to the first aspect of the invention. Further features of the method according to the second aspect of the invention result directly from the functionality of the equalizer according to the first aspect of the invention and its different implementation forms described above.

According to a third aspect the invention relates to a computer program comprising program code for performing the method according to the second aspect of the invention and its different implementation forms when executed on a computer.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be full formed by eternal entities is not reflected in the description of a specific detailed element of that entity which performs that specific step of functionality, it should be clear for a skilled person that these methods and functionalities can be implemented in respective software or hardware elements, or any kind of combination thereof.

**EP 3 338 382 B1**

LIST OF ABBREVIATIONS

| | |
|---|---|
| DCF | dispersion compensating fiber |
| DSP | digital signal processing |
| CD | chromatic dispersion |
| UI | unit interval |
| PMD | polarization mode dispersion |
| BSPE | best sampling phase estimation |
| SBSPE | second best sampling phase estimation |
| CM | channel modeler |
| MLSE | maximum likelihood sequence estimator |
| SPS | sampling phase selector |
| SPA | sampling phase adjuster |
| $\mu_i$ | mean value |
| $\sigma$ | standard deviation |
| $\sigma\mu^2$ | variance of the mean values $\mu_i$ |
| L | number of states of the MLSE |
| OFD | optical front end |
| EDFA | erbium doped fiber amplifier |
| ROSA | receiver in optical subassembling |
| MD | modulator drive |
| DFB | distributed feedback laser |
| VD | Viterbi decoder |
| CT | counter table |
| BER | bit error rate |
| $\mu c$ | micro controller |
| ASIC | application specific integrated circuit |

BRIEF DESCRIPTION OF THE DRAWINGS

Further embodiments of the invention will be described with respect to the following figures, in which:

Fig. 1 shows a schematic diagram of an equalizer according to an embodiment;

Fig. 2 shows a schematic diagram of components of an optical communication network with a communication receiver including an equalizer according to an embodiment;

Fig. 3 shows a schematic diagram of a method of operating an equalizer for a communication receiver according to an embodiment;

Fig. 4 shows a schematic diagram illustrating bit and sample sequences in an equalizer according to an embodiment;

Fig. 5 shows a schematic diagram illustrating a channel modeler implemented in an equalizer according to an embodiment;

Fig. 6 shows a schematic diagram of parts of an equalizer according to an embodiment;

Fig. 7 shows a diagram illustrating an exemplary dependence of a first parameter estimated by an equalizer according to an embodiment on the sampling phase as well as an exemplary dependence of the bit error rate on the sampling phase; and

Fig. 8 shows a schematic diagram of parts of an equalizer according to an embodiment.

DETAILED DESCRIPTION OF EMBODIMENTS

In the following detailed description, reference is made to the accompanying drawings, which form a part of

5

the disclosure, and in which are shown, by way of illustration, specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

It is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

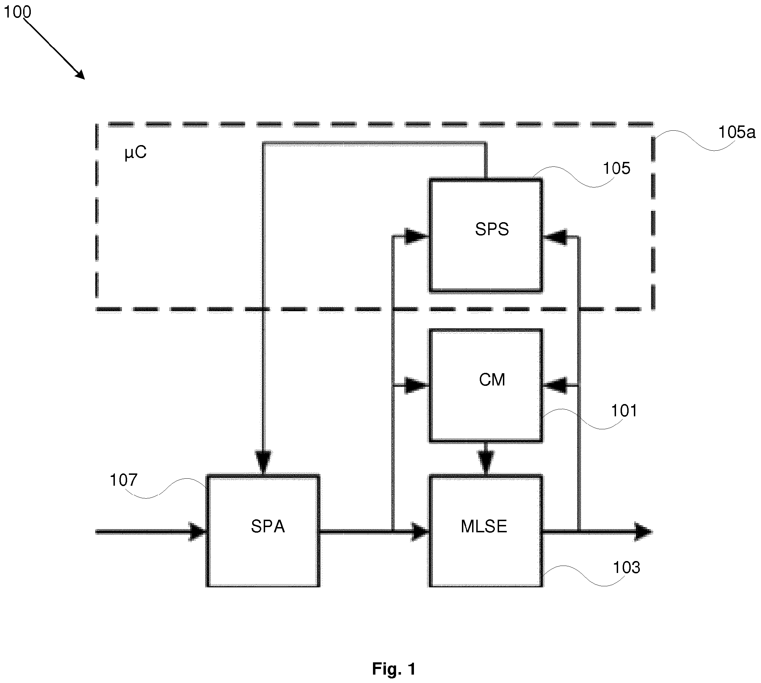

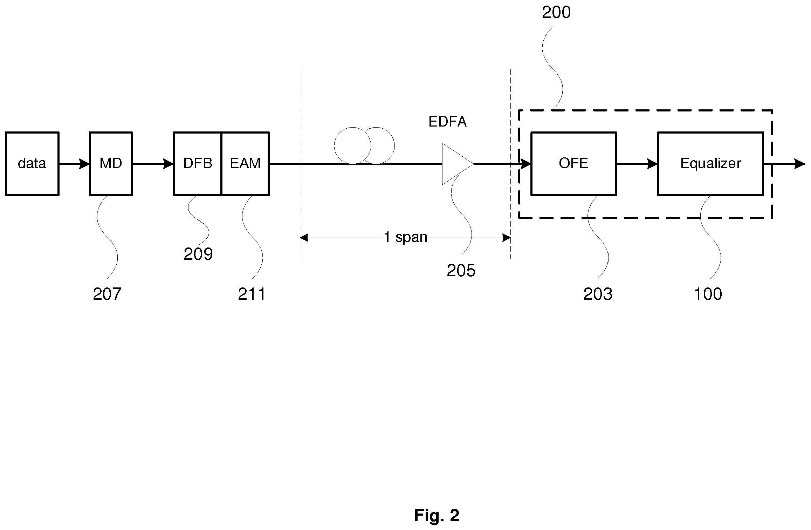

Figure 1 shows a schematic diagram of an equalizer 100 according to an embodiment. The equalizer 100 can be implemented as part of a communication receiver configured to receive a digital communication signal over a communication channel, wherein the digital communication signal is sampled using a sampling signal associated with an adjustable sampling phase. As will be described in more detail in the context of figure 2 further below, the equalizer 100 can be configured to be implemented as part of a communication receiver for an optical communication network.

The equalizer 100 comprises a communication channel modeler or channel modeler 101 (referred to in figure 1 as "CM") configured to provide an adaptable communication channel model on the basis of the digital communication signal. The adaptable communication channel model is defined by a plurality of adaptable branch metrics.

The equalizer 100 further comprises a maximum likelihood sequence estimator 103 (referred to in figure 1 as "MLSE") configured to estimate a sequence of symbols associated with the digital communication signal on the basis of the digital communication signal and the plurality of branch metrics. In other words, the maximum likelihood sequence estimator 103 can use a starting channel model provided by the communication channel modeler 101 to equalize the received communication signal. In an embodiment, the maximum likelihood sequence estimator 103 could be a maximum likelihood sequence estimator based on the Viterbi algorithm.

In an embodiment, each branch metric of the plurality of adaptable branch metrics defining the adaptable communication channel model is defined by a histogram comprising a plurality of bins, wherein each histogram is associated with a probability density function of the sequence of symbols associated with the digital communication signal and wherein each histogram defines a mean value $\mu_i$ and a standard deviation $\sigma_i$.

For instance, a binary L-state MLSE 103 uses $2L$ different branch metrics with $L=2^M$ where $M$ is the length of the memory of the MLSE 103. In this case, each branch metric is defined by ab $N$-bin histogram (probability density function), where $N$ is the resolution of the communication signal entering the equalizer 100. In an embodiment, the histograms defining the branch metrics are normalized so that each sum of all bins is equal to 1 and each histogram can be defined by its mean value $\mu_i$ and its standard deviation $\sigma_i$. Each branch can be defined by $M+1$ bits.

The equalizer 100 further comprises a target sampling phase estimator or sampling phase selector 105 (referred to in figure 1 as "SPS"). The target sampling phase estimator 105 is configured to determine, during a first target sampling phase estimation stage, for each sampling phase of a first plurality of sampling phases a first parameter on the basis of the plurality of adaptable branch metrics and to estimate a first target sampling phase on the basis of the plurality of first parameters. In an embodiment, the target sampling phase estimator 105 is configured to determine for each sampling phase of the first plurality of sampling phases the first parameter on the basis of the plurality of adaptable branch metrics using the same communication channel model.

As indicated in figure 1, in an embodiment the target sampling phase estimator 105 can be partly or completely implemented in a microcontroller ($\mu$C) 105a to reduce the complexity, as the target sampling phase estimator 105 does not experience fast variations and uses data before and after the maximum likelihood sequence estimator 103.

The equalizer 100 further comprises a sampling phase adjuster 107 (referred to in figure 1 as "SPA") configured to adjust the sampling phase to the first target sampling phase.

In an embodiment, the equalizer 100 further comprises an interpolator configured to interpolate the digital communication signal between sampling points.

The equalizer 100 can be used to process signals with an arbitrary number of samples per symbol. However, due to the increasing complexity usually at most two samples per symbol are used in practice. Often only one sample per symbol provides suboptimum performance and is more sensitive to sampling phase variations and jitter. The below embodiments for the case of one sample per symbol and two samples per symbol are described in the context of quantized symbols. However, as the person skilled in the art will appreciate, the present invention is not limited to quantized symbols.

In an embodiment, where the digital communication signal is sampled with a sampling rate of one sample per symbol, the target sampling phase estimator 105 is configured to estimate during the first target sampling phase estimation stage the first target sampling phase on the basis of the plurality of first parameters by determining a sampling phase for which a first parameter of the plurality of first parameters has a maximum value or lies above a threshold and by determining the first parameter for each sampling phase of the first plurality of sampling phases on the basis of the following equations:

$$BSPE^1 = BSPE^A = \frac{\sigma_\mu^2(H_{01}^A)}{\sigma^2(H_1^A)}\left(aK_1^A + bK_2^A\right),\ 0 \le a,b \le 1,$$

$$K_1^A = \overline{\mu(H_{11}^A)} - \overline{\mu(H_{00}^A)},$$

$$K_2^A = \overline{\mu(H_1^A)} - \overline{\mu(H_0^A)},$$

and

$$\sigma_\mu^2 = \frac{1}{2L}\sum_{i=1}^{2L}(\mu_i - \bar{\mu})^2,$$

wherein $BSPE^1$ denotes the first parameter, $\sigma_\mu^2$ denotes the variance of the mean values $\mu_i$ of the plurality of histograms defining the plurality of adaptable branch metrics, L denotes the number of states of the maximum likelihood sequence estimator 103, and $H_1$, $H_0$, $H_{11}$, $H_{00}$ and $H_{01}$ define a metric set with $H_1$ all branches decoding 1 (e.g. xx1xx in a 16-state MLSE 103), $H_0$ all branches decoding 0 (e.g. xx0xx in a 16-state MLSE 103), $H_{11}$ all branches with three ones in the middle (e.g. x111x in a 16-state MLSE 103), $H_{00}$ all branches with three zeros in the middle (e.g. x000x in a 16-state MLSE 103) and $H_{01}$ all branches with three zeros or three ones in the middle (i.e. $H_{01}$ = $H_{00}$ OR $H_{11}$).

In an alternative embodiment, where the digital communication signal is sampled with a sampling rate of two samples per symbol, the target sampling phase estimator 105 is configured to estimate during the first target sampling phase estimation stage the first target sampling phase on the basis of the plurality of first parameters by determining a sampling phase for which a first parameter of the plurality of first parameters has a maximum value and by determining the first parameter for each sampling phase of the first plurality of sampling phases on the basis of the following equations:

$$BSPE^2 = BSPE^{A,B} = \frac{\sigma_{\mu,A}^2 + \sigma_{\mu,B}^2}{\sigma_A^2 + \sigma_B^2}\left(a(K_1^A + K_1^B) + b(K_2^A + K_2^B)\right),\ 0 \le a,b \le 1,$$

$$K_1^W = \overline{\mu(H_{11}^W)} - \overline{\mu(H_{00}^W)},$$

$$K_2^W = \overline{\mu(H_1^W)} - \overline{\mu(H_0^W)},$$

$$W = A, B,$$

and

$$\sigma_\mu^2 = \frac{1}{2L}\sum_{i=1}^{2L}(\mu_i - \bar{\mu})^2,$$

wherein $BSPE^2$ denotes the first parameter, $\sigma_{\mu,A}^2$ denotes the variance of the mean values $\mu_i$ of the plurality of histograms defining the plurality of adaptable branch metrics for the samples A, $\sigma_{\mu,B}^2$ denotes the variance of the mean values $\mu_i$ of the plurality of histograms defining the plurality of adaptable branch metrics for the samples B, L denotes the number of states of the maximum likelihood sequence estimator 103 and $H_1$, $H_0$, $H_{11}$, $H_{00}$ and $H_{01}$ define a metric set with $H_1$ all branches decoding 1 (e.g. xx1xx in a 16-state MLSE 103), $H_0$ all branches decoding 0 (e.g. xx0xx in a 16-state MLSE 103), $H_{11}$ all branches with three ones in the middle (e.g. x111 x in a 16-state MLSE 103), $H_{00}$ all branches with three zeros in the middle (e.g. x000x in a 16-state MLSE 103) and $H_{01}$ all branches with three zeros or three ones in the middle

(i.e. $H_{01}$ = $H_{00}$ OR $H_{11}$).

For the exemplary case of a 16-state MLSE 103 the metric sets $H_{00}$, $H_{11}$ and $H_{01}$ are given by: $H_{00}$ = 00000, 00001, 10000, 10001; Hn = 01110, 01111, 11110, 11111; $H_{01}$ = 00000, 00001, 10000, 10001, 01110, 01111, 11110, 11111.

In an embodiment, the target sampling phase estimator 105 is further configured to determine, during a second target sampling phase estimation stage (or fine tuning target sampling phase estimation stage), for each sampling phase of a second plurality of sampling phases a second parameter on the basis of a plurality of error events of the maximum likelihood sequence estimator 103 and to estimate a second target sampling phase on the basis of the plurality of second parameters. This allows the sampling phase adjuster 107 to adjust the sampling phase to the second further improved target sampling phase.

As already mentioned above, in an embodiment the second target sampling phase estimation stage is a fine tuning of the first target sampling phase determined by the target sampling phase estimator 105 during the first target sampling phase estimation stage. Thus, in an embodiment the sampling phases of the second plurality of sampling phases are located in the vicinity of the first target sampling phase, wherein the difference between each sampling phase of the second plurality of sampling phases and the first target sampling phase is smaller than a sampling phase difference threshold. In an embodiment, the sampling phase difference threshold can have the size of one unit interval.

In an embodiment, the target sampling phase estimator 105 is configured to estimate the second target sampling phase on the basis of a plurality of error events of the maximum likelihood sequence estimator 103 having an error probability larger than a predefined probability threshold. Depending on channel conditions and the memory length of the maximum likelihood sequence estimator 103, error bursts can have different probabilities. In an embodiment, these error events comprise single error events, e.g. a single bit error, double error events, e.g. a double bit error, and/or triple error events, e.g. a triple bit error, as will be described in more detail further below.

In an embodiment, it is assumed that error bursts with maximum length of 3 are most critical. Generally, bit patterns have a different error probability. The most critical error patterns are defined for the case of a M=4 and M=6 binary MLSE (16- and 64-state MLSE) 103. An error event is defined by 2M+E bits where M is the memory length of the MLSE 103 and E is length of error burst. For M=4 and E=3 the error event consists of 11 bits $b_1b_2b_3b_4\underline{b_5}\underline{b_6}\underline{b_7}b_8b_9b_{10}b_{11}$: where $\underline{b}$ denotes an erroneous bit (error). In this case, the MLSE 103 uses the following branches:

$$\underline{C} = b_1b_2b_3b_4\underline{b_5}, b_2b_3b_4\underline{b_5}\underline{b_6}, ..., \underline{b_7}b_8b_9b_{10}b_{11} = (\underline{B_1}\underline{B_2}\underline{B_3}\underline{B_4}\underline{B_5}\underline{B_6}\underline{B_7}) \text{ instead of using the branches}$$

$$C = b_1b_2b_3b_4b_5, b_2b_3b_4b_5b_6, ..., b_7b_8b_9b_{10}b_{11} = (B_1B_2B_3B_4B_5B_6B_7), \text{ where a branch is denoted by a number from 0}$$
to $2^{M+1}-1$ (from 0 to 31 in a 16-state MLSE 103).

For an error event of length 2 (0101$\underline{00}$1011= 0101111011) one has, if the least significant bit is the first one in the binary representation (e.g. 10100=5):
C= (10 5 18 9 20 26) and $\underline{C}$= (26 29 30 15 23 27).

Surprisingly, it has been found out by processing off-line data that the following error events are the most critical:

For a 16-state MLSE

*Single error event 0 0 0 1 0 1 0 0 0*
C= (8 20 10 5 2) and $\underline{C}$= (24 28 14 7 3)

*Double error event 1 0 0 1 0 1 1 0 0 0*
C= (8 20 26 13 6 3) and $\underline{C}$= (24 12 22 11 5 2)

*Triple error event 0 1 0 1 1 0 1 1 0 0 0*
C= (24 12 22 27 13 6 3) and $\underline{C}$= (8 20 10 21 10 5 2)

For a 64-state MLSE

*Single error event 1 0 0 0 0 1 0 1 0 0 0 0 0*
C= (33 80 40 20 10 5 2) and $\underline{C}$= (97 112 56 28 14 7 3)

*Double error event 0 1 1 1 1 1 0 1 1 1 1 0 0 0*
C= (62 95 111 119 123 61 30 15) and C̲= (126 63 95 111 119 59 29 14)
*Triple error event 0 1 1 1 1 1 1 0 1 1 0 0 1 1 1*
C= (126 63 95 111 55 27 77 102 115) and C̲= (62 95 47 87 43 21 74 101 114)

In an embodiment, where the digital communication signal is sampled with a sampling rate of one sample per symbol, the target sampling phase estimator 105 is configured to estimate during the second or fine tuning target sampling phase estimation stage the second target sampling phase on the basis of the plurality of second parameters by determining a sampling phase for which a second parameter of the plurality of second parameters has a maximum value and by determining the second parameter for each sampling phase of the second plurality of sampling phases on the basis of the following equations:

$$SBSPE_i = |E_i(1)||E_i(2)||E_i(3)|, \ i = 1, 2,$$

$$E_1 = sum\left(log \cdot erfc\left(\frac{Q_1}{\sqrt{2}}\right)\right), E_2 = sum\left(log \cdot erfc\left(\frac{Q_{min}}{\sqrt{2}}\right)\right), Q_{min} = \min(Q_2, Q_3),$$

and

$$Q_1 = \frac{abs(\mu(C) - \mu(\underline{C}))}{\sigma(C) + \sigma(\underline{C})}, Q_2 = \frac{abs(\mu(C) - \mu(\underline{C}))}{2\sigma(C)}, Q_3 = \frac{abs(\mu(C) - \mu(\underline{C}))}{2\sigma(\underline{C})},$$

wherein $SBSPE_i$ denotes the second parameter, $E_1$ and $E_2$ denote two alternative error event estimation functions, *C* and *C̲* denote vectors defining competing error events and Ei(1) denotes an estimation related to single error event, $E_i(2)$ denotes an estimation related to a double error event, and $E_i(3)$ denotes an estimation related to a triple error event.

In an alternative embodiment, where the digital communication signal is sampled with a sampling rate of two samples per symbol, the target sampling phase estimator 105 is configured to estimate during the second target sampling phase estimation stage the second target sampling phase on the basis of the plurality of second parameters by determining a sampling phase for which a second parameter of the plurality of second parameters has a maximum value and by determining the second parameter for each sampling phase of the second plurality of sampling phases on the basis of the following equations:

$$SBSPE_i = \prod_{j=1}^{n}\left|E_i(p_j)\right|, i = 1, 2,$$

$$E_1 = sum\left(log \cdot erfc\left(\frac{Q_1}{\sqrt{2}}\right)\right), E_2 = sum\left(log \cdot erfc\left(\frac{Q_{min}}{\sqrt{2}}\right)\right), Q_{min} = \min\left(Q_2^A, Q_3^A, Q_2^B, Q_3^B\right),$$

and

$$Q_1 = \frac{abs(\mu(C) - \mu(\underline{C}))}{\sigma(C) + \sigma(\underline{C})}, Q_2 = \frac{abs(\mu(C) - \mu(\underline{C}))}{2\sigma(C)}, Q_3 = \frac{abs(\mu(C) - \mu(\underline{C}))}{2\sigma(\underline{C})},$$

wherein $SBSPE_i$ denotes the second parameter, $E_1$ and $E_2$ denote two alternative error event estimation functions, *C* and *C̲* denote vectors defining competing error events and $p_j$ can be any nonzero positive integer. In an embodiment, $p_1$ can be equal to 1, $p_2$ can be equal to 2 and $p_3$ can be equal to 3.

The two above embodiments for fine tuning the first target sampling phase, i.e. for estimating the second target sampling phase, are based on the following ideas. The second parameter provides an estimate of error events and, thus, an indication for a further improved sampling phase. In an embodiment, the calculation of the error event estimation functions $E_1$ and $E_2$ can be done using look-up tables.

Figure 2 shows a schematic diagram of components of an optical communication network with a communication receiver 200 including an equalizer 100 according to an embodiment. The communication receiver 200 further comprises an optical front end (OFD) 203 for receiving a digital communication signal over an optical fiber that is amplified by an erbium doped fiber amplifier (EDFA) 205. The optical front end 203 can include a photo detector and a further amplifier that can be integrated in receiver optical subassemblies (ROSA).

The digital communication signal transmitted over the optical fiber is based on data provided to a modulator driver (MD) 207. The modulation itself is performed by a distributed feedback laser (DFB) 209 and an electro-absorption modulator (EAM) 211.

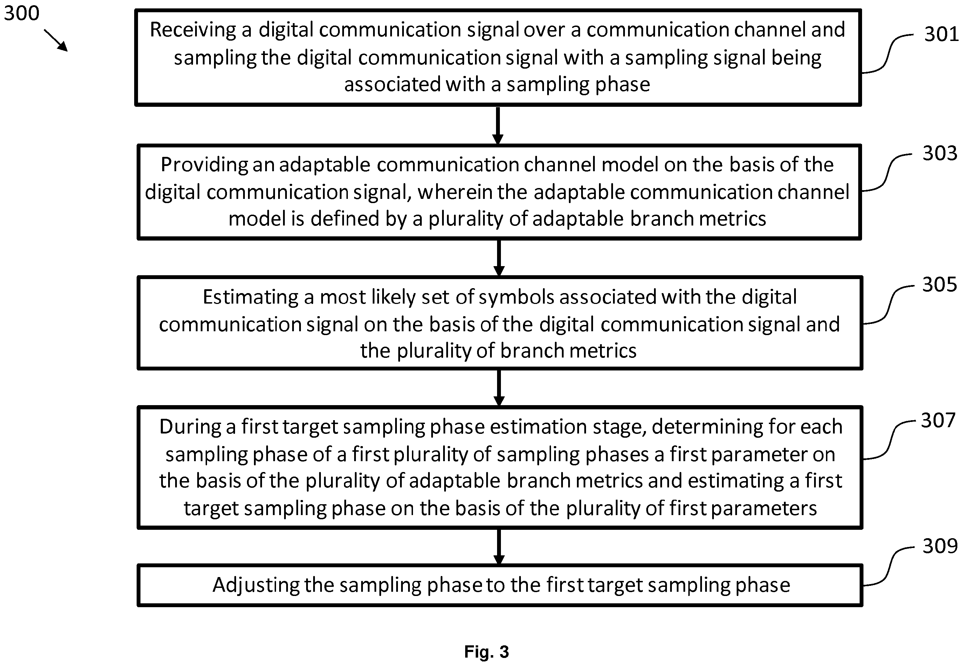

Figure 3 shows a schematic diagram of a method 300 of operating an equalizer, such as the equalizer 100 shown in figure 1, according to an embodiment. The method 300 comprises the following steps.

In a step 301 a digital communication signal is received over a communication channel and the digital communication signal is sampled with a sampling signal being associated with a sampling phase.

In a step 303 an adaptable communication channel model is provided on the basis of the digital communication signal, wherein the adaptable communication channel model is defined by a plurality of adaptable branch metrics.

In a step 305 a most likely sequence of symbols associated with the digital communication signal is estimated on the basis of the digital communication signal and the plurality of branch metrics.

In a step 307 during a first target sampling phase estimation stage for each sampling phase of a first plurality of sampling phases a first parameter is determined on the basis of the plurality of adaptable branch metrics and a first target sampling phase is estimated on the basis of the plurality of first parameters.

In a step 309 the sampling phase is adjusted to the first target sampling phase estimated in step 307.

In an embodiment, the method 300 comprises after the step 309 of adjusting the sampling phase to the first target sampling phase the further steps of, during a second target sampling phase estimation stage, determining for each sampling phase of a second plurality of sampling phases a second parameter on the basis of a plurality of error events of the maximum likelihood sequence estimator and estimating a second target sampling phase on the basis of the plurality of second parameters, and adjusting the sampling phase to the second target sampling phase.

In the following, further implementation forms, embodiments and aspects of the equalizer 100 and the method 300 will be described.

In an embodiment, the channel modeler 101 calculates mean values of trellis branches. They are used for Euclidian distance metric calculation in order to find the most likely transmitted data sequence. In the binary case (binary trellis), only two symbols are sent, 0 and 1. There are $2^{M+1}$ different branches. The channel modeler 101 uses the decoded data sequence and the MLSE input samples to calculate the channel model (mean values). The binary sequence can be replaced by a decimal number in that 00000=0, 00001=1,..., and 11111=31 in case of a 16-state MLSE. In general, branches are denoted by $0, 1,...,2^{M+1}-1$.

In an embodiment, the MLSE input data are quantized and represented by $N$ bits. Thus, the input data can have values $0, 1, ..., 2^N-1$. In an embodiment, the channel modeler 101 uses $2^{M+1}$ sets of counters, where each set consists of $2^N$ counters. Each counter content is denoted here by $c_{i,j}$, $i=0,1,... 2^{M+1}-1$ $j=0,1,... 2^N-1$, where $i$ denotes a branch, and $j$ denotes a quantized value.

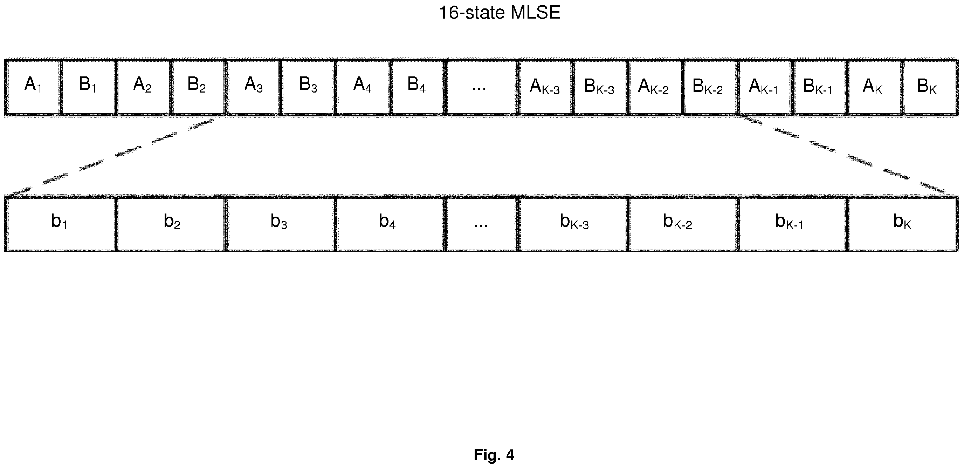

Due to the data parallelization required at high processing speed, in an embodiment the equalizer 100 decodes bits in blocks. In an embodiment, the channel modeler 101 uses $K$ decoded bits $(b_1,b_2,...,b_K)$ to extract a new channel model. A quantized MLSE input sequence is joined to the $K$-bit decoded sequence. In case of a one sample per symbol MLSE 103, the quantized sequence is denoted by $(A_1,A_2,...,A_K)$, while in case of two samples per symbol it is denoted by $(A_1, B_1, A_2, B_2,,..., A_K, B_K)$, as shown in figure 4. The total number of observations (decoded bits) that can be used for a channel model derivation is equal to $K$, while $K$-$2L$ samples A and $K$-$2L$ samples B (2 samples per symbol MLSE) can be used for the same purpose. Practically, $K$-$2M$ observations per MLSE output bit block are used for building a new channel model. Observations are accumulated and after $S$ data blocks the final channel model is derived.

In an embodiment, the MLSE 103 is realized by a Viterbi decoder (VD). Each block of the VD can be of size $P$, e.g. $P=64$. In order to reduce the complexity, in an embodiment only $P_1<P$ bits are used for a channel model. However, in an embodiment more blocks can be used for the final channel model estimation. The number of blocks depends on the MLSE memory and channel variations. Larger $L$ requires more blocks while in case of fast channel variations less blocks can be used.

The counter table (CT) is a two-dimensional table with $2^{M+1}$ rows and $2^N$ columns. At the start, the table entries are set to 0. There are two CTs, one for sample A (CTA) and one for sample B (CTB). Branch address uses $2M+1$ bits to address the row of CT. The quantized sample value locates the column. The located counter content is increased by 1.

The sum of all table entries are equal to $L=K$-$2M$. The sum of row $i$ is denoted by $s_i$. The sums of two rows, e.g. $s_i$ and $s_j$, need not to be the same. Each row represents the quantized histogram of a certain bit pattern. The mean value of histogram (row) is defined by the following equation:

$$\mu_i(W) = \frac{1}{s_i} \sum_{j=0}^{2^N-1} j c_{i,j}^W, \quad W = A, B$$

The variance histogram (row) is calculated by the following equation:

$$\sigma_i^2(W) = \frac{1}{s_i} \sum_{j=0}^{2^N-1} c_{i,j}^W \left( j - \mu_i(W) \right)^2 \,, \quad W = A, B$$

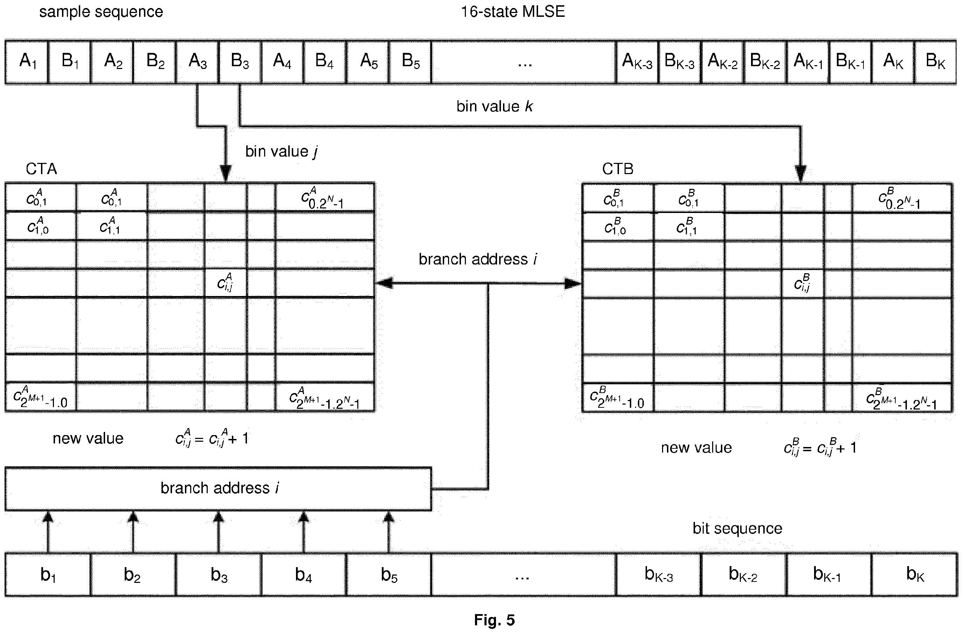

As already described above, the equalizer 100 can use a coarse (first) and fine (second) sampling phase estimation stage. In the first stage i.e. coarse scanning, the first parameter can be calculated at positions 0, $\pm$UI/2, ..., $\pm n$UI/2 (where UI denotes the unit interval). The sampling phase $k$UI resulting in the largest first parameter is selected. During coarse scanning, i.e. the first stage, the MLSE 103 can use the channel model at the sampling phase 0 that is not updated. The counter tables are used for the required channel model estimation. The sampling phase scanning can be achieved by a simple sample shift. For example, in case of 16-state MLSE 103 the estimation at the sampling phase UI/2 is done by blocks presented in Figure 5, where counting starts from sample $B_3$. An interpolation is not required during this stage.

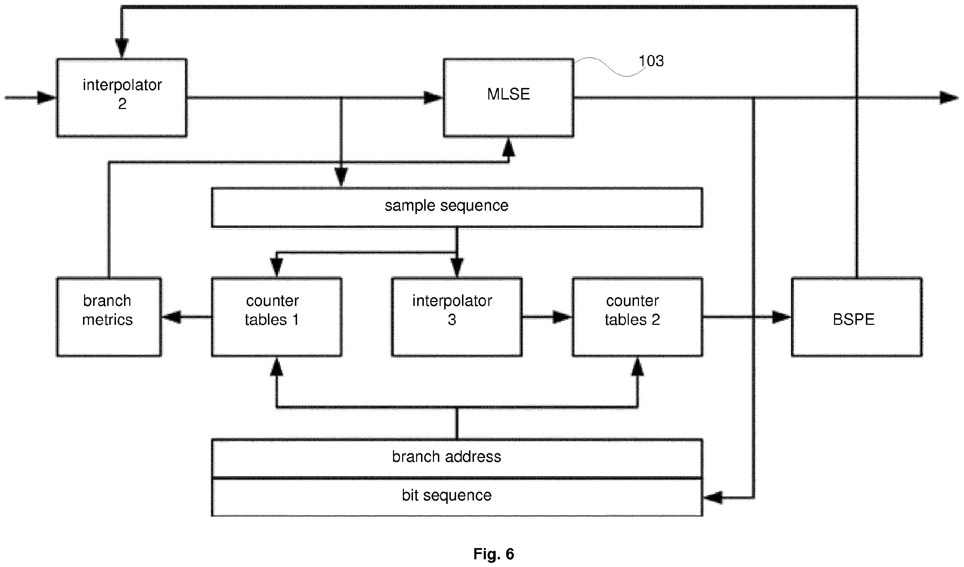

Channel models at all scanned sampling phases are stored. After the best sampling phase selection the channel model corresponding to this phase is used. In an embodiment, an "interpolator 2" (shown in figure 6 and comprising a buffer plus an interpolator) only selects the start of sample sequence, sample A or sample B.

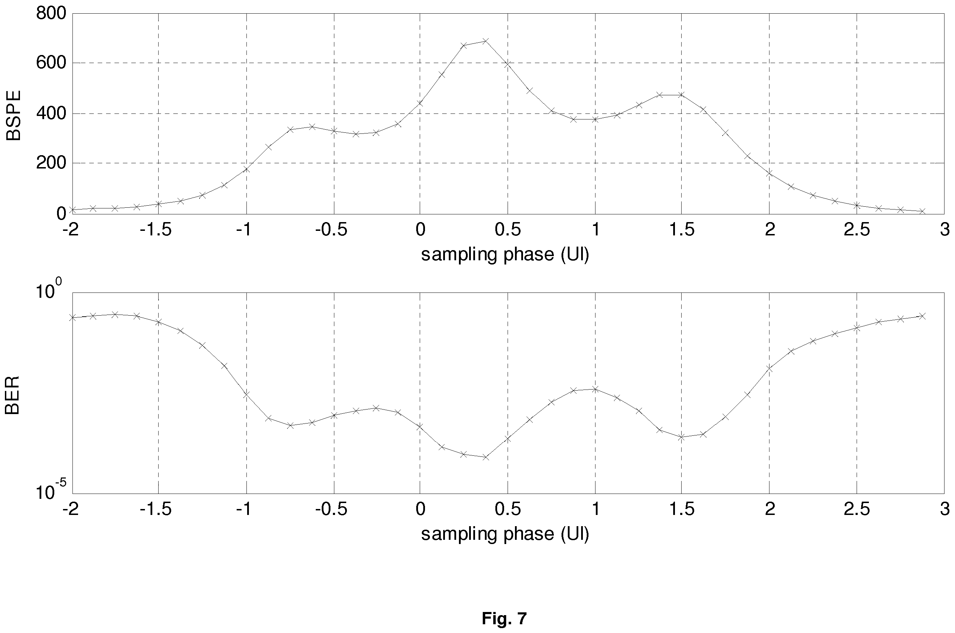

The off-line data of a 28Gb/s 80 km transmission experiment have been processed. An electro-absorption modulator and a direct detection (PIN diode) have been used. Figure 7 shows a diagram illustrating the dependence of the first parameter, i.e. BSPE, on the sampling phase as well as the dependence of the bit error rate (BER) on the sampling phase for this case over 5 unit intervals (UI) for a one sample per symbol MLSE 103. The maximum value of the first parameter, i.e. BSPE, indicates the best BER. Samples are quantized by 5-bit ADC. During course scanning (first stage) the sampling phase 0.5UI has been selected.

In an embodiment, the fine scanning (second stage) searches for the best sampling phase within one UI of the best sampling phase derived in the first stage, i.e. the first target sampling phase. In an embodiment, the interpolation range can be decreased to only $\pm$0.25UI to get faster results. This is the phase $k$ or phase 0.5UI in figure 7.

After the coarse scanning and the first target sampling phase selection in the first stage the equalizer 100 will be almost at the optimum sampling phase. The MLSE 103 may deliver decoded data after this stage. Now, it is possible to perform the fine sampling phase adjustment, i.e. the second stage, without interrupting the data traffic.

In an embodiment, the second stage requires new counters and the interpolation between samples A and B. These circuits can be implemented in an ASIC or in a micro controller ($\mu$C). An embodiment of an ASIC implementation is shown in figure 6. In an embodiment, the "interpolator 3" shown in figure 6 can be used to interpolate between samples A and B. In order to avoid generating error bursts in an embodiment the "interpolator 2" shown in figure 6 can be slowly adjusted to the best sampling phase. This adjustment can be done in small phase increments. The phase increment can be equal to the scanning step used during the first stage. At each new sampling phase a few channel model updates should be carried out.

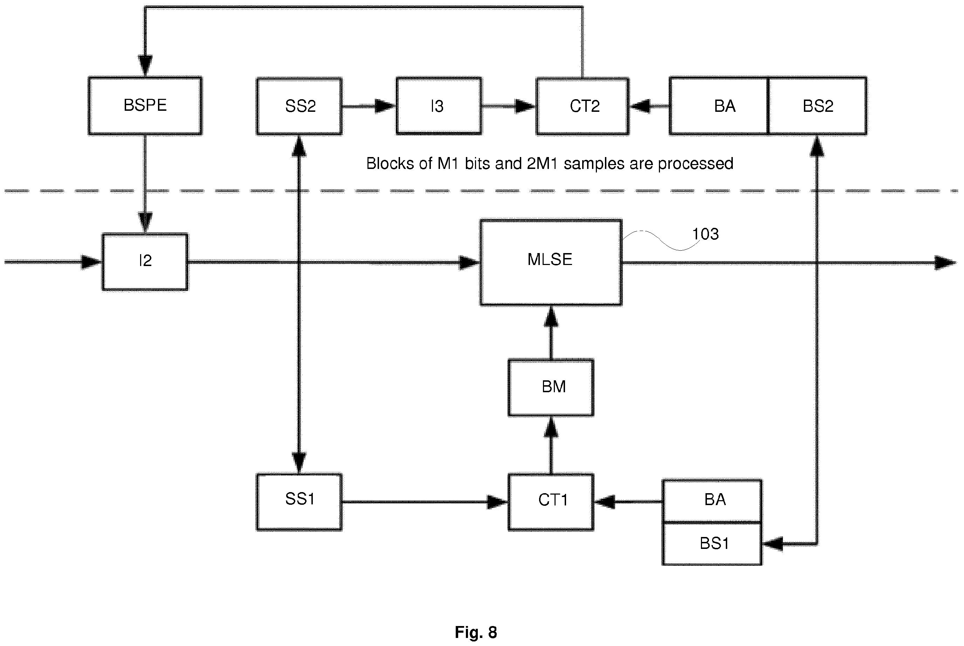

Figure 8 presents a further embodiment of a microcontroller implementation. $N_1$ blocks of $M_1$ bits and $2M_1$ samples are processed. Counter tables at the selected sampling phase (interpolator "I3" is used for interpolation) are accumulated over $N_1$ blocks of data. After scanning the target sampling phase estimator 103 tells the interpolator "I2" where to interpolate. The interpolator "I2" can perform the interpolation of samples in small phase increments.

The devices described herein may be implemented as optical circuit within a chip or an integrated circuit or an application specific integrated circuit (ASIC). The invention can be implemented in digital and/or analogue electronic and optical circuitry.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. An equalizer (100) for a communication receiver (200) configured to receive a digital communication signal over a communication channel, the digital communication signal being sampled with a sampling phase, wherein the equalizer (100) comprises:

   a communication channel modeler (101) configured to provide an adaptable communication channel model on the basis of the digital communication signal, wherein the adaptable communication channel model is defined by a plurality of adaptable branch metrics;
   a maximum likelihood sequence estimator (103) configured to estimate a sequence of symbols on the basis of the digital communication signal and the plurality of branch metrics;
   a target sampling phase estimator (105), wherein during a first target sampling phase estimation stage the target sampling phase estimator (105) is configured to determine for each sampling phase of a first plurality of sampling phases a first parameter on the basis of the plurality of adaptable branch metrics and to estimate a first target sampling phase on the basis of the plurality of first parameters; and
   a sampling phase adjuster (107) configured to adjust the sampling phase to the first target sampling phase;
   wherein the target sampling phase estimator (105) is further configured during a second target sampling phase estimation stage to determine for each sampling phase of a second plurality of sampling phases a second parameter on the basis of a plurality of error events of the maximum likelihood sequence estimator (103) and to estimate a second target sampling phase on the basis of the plurality of second parameters, and wherein the sampling phase adjuster (107) is further configured to adjust the sampling phase to the second target sampling phase;
   wherein when the digital communication signal is sampled with a sampling rate of one sample per symbol, the target sampling phase estimator (105) is configured to estimate during the second target sampling phase estimation stage the second target sampling phase on the basis of the plurality of second parameters by determining a sampling phase for which a second parameter of the plurality of second parameters has a maximum value and by determining the second parameter for each sampling phase of the second plurality of sampling phases on the basis of the following equation:

$$SBSPE_i = |E_i(1)||E_i(2)||E_i(3)|, \ i = 1, 2,$$

wherein,

$$E_1 = sum\left(log \cdot erfc\left(\frac{Q_1}{\sqrt{2}}\right)\right), E_2 = sum\left(log \cdot erfc\left(\frac{Q_{min}}{\sqrt{2}}\right)\right)$$

wherein,

$$Q_1 = \frac{abs(\mu(C)-\mu(\underline{C}))}{\sigma(C)+\sigma(\underline{C})} \text{ and } Q_{min} = \min(Q_2, Q_3),$$

wherein,

$$Q_2 = \frac{abs(\mu(C)-\mu(\underline{C}))}{2\sigma(C)} \text{ and } Q_3 = \frac{abs(\mu(C)-\mu(\underline{C}))}{2\sigma(\underline{C})},$$

wherein $SBSPE_i$ denotes the second parameter, $E_1$ and $E_2$ denote two alternative error event estimation functions, and $C$ and $\underline{C}$ denote vectors defining competing error events; and

wherein when the digital communication signal is sampled with a sampling rate of two samples per symbol, the target sampling phase estimator (105) is configured to estimate during the second target sampling phase estimation stage the second target sampling phase on the basis of the plurality of second parameters by determining a sampling phase for which a second parameter of the plurality of second parameters has a maximum value and by determining the second parameter for each sampling phase of the second plurality of sampling phases on the basis of the following equation:

$$SBSPE_i = \prod_{j=1}^{n} |E_i(p_j)|, i = 1, 2,$$

wherein,

$$E_1 = sum\left(log \cdot erfc\left(\frac{Q_1}{\sqrt{2}}\right)\right), E_2 = sum\left(log \cdot erfc\left(\frac{Q_{min}}{\sqrt{2}}\right)\right),$$

wherein,

$$Q_1 = \frac{abs(\mu(C) - \mu(\underline{C}))}{\sigma(C) + \sigma(\underline{C})}, \text{ and } Q_{min} = \min\left(Q_2^A, Q_3^A, Q_2^B, Q_3^B\right),$$

wherein,

$$Q_2 = \frac{abs(\mu(C) - \mu(\underline{C}))}{2\sigma(C)} \text{ and } Q_3 = \frac{abs(\mu(C) - \mu(\underline{C}))}{2\sigma(\underline{C})}$$

wherein $SBSPE_i$ denotes the second parameter, $E_1$ and $E_2$ denote two alternative error event estimation functions, and $C$ and $\underline{C}$ denote vectors defining competing error events.

2. The equalizer (100) of claim 1, wherein each branch metric of the plurality of adaptable branch metrics defining the adaptable communication channel model is defined by a histogram comprising a plurality of bins, wherein each histogram is associated with a probability density function of a sequence of symbols associated with the digital communication signal and wherein each histogram defines a mean value $\mu_i$ and a standard deviation $\sigma_i$.

3. The equalizer (100) of claim 2, wherein the digital communication signal is sampled with a sampling rate of one sample per symbol and wherein the target sampling phase estimator (105) is configured to estimate during the first target sampling phase estimation stage the first target sampling phase on the basis of the plurality of first parameters by determining a sampling phase for which a first parameter of the plurality of first parameters has a maximum value and by determining the first parameter for each sampling phase of the first plurality of sampling phases on the basis of the following equation:

$$BSPE^1 = BSPE^A = \frac{\sigma_\mu^2(H_{01}^A)}{\sigma^2(H_1^A)}\left(aK_1^A + bK_2^A\right), \ 0 \leq a, b \leq 1,$$

wherein,

$$K_1^A = \overline{\mu(H_{11}^A)} - \overline{\mu(H_{00}^A)}, K_2^A = \overline{\mu(H_1^A)} - \overline{\mu(H_0^A)}, \text{ and } \sigma_\mu^2 = \frac{1}{2L}\sum_{i=1}^{2L}(\mu_i - \bar{\mu})^2,$$

and wherein $BSPE^1$ denotes the first parameter, $\sigma_\mu^2$ denotes the variance of the mean values $\mu_i$ of the plurality of histograms defining the plurality of adaptable branch metrics, L denotes the number of states of the maximum likelihood sequence estimator (103), and wherein $H_1$, $H_0$, $H_{11}$, $H_{00}$ and $H_{01}$ define a metric set with $H_1$ all branches decoding 1, $H_0$ all branches decoding 0, $H_{11}$ all branches with three ones in the middle, $H_{00}$ all branches with three zeros in the middle and $H_{01}$ all branches with three zeros or three ones in the middle.

4. The equalizer (100) of claim 2, wherein the digital communication signal is sampled with a sampling rate of two samples per symbol and wherein the target sampling phase estimator (105) is configured to estimate during the first target sampling phase estimation stage the first target sampling phase on the basis of the plurality of first parameters by determining a sampling phase for which a first parameter of the plurality of first parameters has a maximum value and by determining the first parameter for each sampling phase of the first plurality of sampling phases on the basis of the following equation:

$$BSPE^2 = BSPE^{A,B} = \frac{\sigma_{\mu,A}^2 + \sigma_{\mu,B}^2}{\sigma_A^2 + \sigma_B^2}\left(a(K_1^A + K_1^B) + b(K_2^A + K_2^B)\right),\ 0 \le a, b \le 1,$$

wherein,

$$K_1^W = \overline{\mu(H_{11}^W)} - \overline{\mu(H_{00}^W)},\ K_2^W = \overline{\mu(H_1^W)} - \overline{\mu(H_0^W)},\ W = A, B,$$

and

$$\sigma_\mu^2 = \frac{1}{2L}\Sigma_{i=1}^{2L}(\mu_i - \bar{\mu})^2,$$

and wherein $BSPE^2$ denotes the first parameter, $\sigma_{\mu,A}^2$ denotes the variance of the mean values $\mu_i$ of the plurality of histograms defining the plurality of adaptable branch metrics for the samples A, $\sigma_{\mu,B}^2$ denotes the variance of the mean values $\mu_i$ of the plurality of histograms defining the plurality of adaptable branch metrics for the samples B, L denotes the number of states of the maximum likelihood sequence estimator (103) and wherein $H_1$, $H_0$, $H_{11}$, $H_{00}$ and $H_{01}$ define a metric set with $H_1$ all branches decoding 1, $H_0$ all branches decoding 0, $H_{11}$ all branches with three ones in the middle, $H_{00}$ all branches with three zeros in the middle and $H_{01}$ all branches with three zeros or three ones in the middle.

5. The equalizer (100) of any one of the preceding claims, wherein the target sampling phase estimator (105) is configured to determine for each sampling phase of the first plurality of sampling phases the first parameter on the basis of the plurality of adaptable branch metrics using the same communication channel model.

6. The equalizer (100) of any one of the preceding claims, wherein the equalizer (100) comprises an interpolator configured to interpolate the digital communication signal between sampling points.

7. The equalizer (100) of any one of the preceding claims, wherein the sampling phases of the second plurality of sampling phases are located in the vicinity of the first target sampling phase and wherein the difference between each sampling phase of the second plurality of sampling phases and the first target sampling phase is smaller than a sampling phase difference threshold.

8. The equalizer (100) of any one of the preceding claims, wherein the target sampling phase estimator (105) is configured to estimate the second target sampling phase on the basis of a plurality of error events of the maximum likelihood sequence estimator having an error probability larger than a predefined probability threshold.

9. The equalizer (100) of any one of the preceding claims, wherein the plurality of error events comprise single error events, double error events and/or triple error events.

10. A method (300) of operating an equalizer for a communication receiver configured to receive a digital communication signal over a communication channel, the digital communication signal being sampled with a sampling phase, wherein the method comprises the steps of:

providing (303) an adaptable communication channel model on the basis of the digital communication signal, wherein the adaptable communication channel model is defined by a plurality of adaptable branch metrics; estimating (305) a most likely sequence of symbols on the basis of the digital communication signal and the plurality of branch metrics; during a first target sampling phase estimation stage, determining (307) for each sampling phase of a first plurality of sampling phases a first parameter on the basis of the plurality of adaptable branch metrics and estimating a first target sampling phase on the basis of the plurality of first parameters; and adjusting (309) the sampling phase to the first target sampling phase; wherein the method comprises after the step (309) of adjusting the sampling phase to the first target sampling phase the further steps of:

during a second target sampling phase estimation stage, determining for each sampling phase of a second plurality of sampling phases a second parameter on the basis of a plurality of error events of the maximum likelihood sequence estimator and estimating a second target sampling phase on the basis of the plurality of second parameters, and adjusting the sampling phase to the second target sampling phase;

wherein when the digital communication signal is sampled with a sampling rate of one sample per symbol, the method comprises: estimating during the second target sampling phase estimation stage the second target sampling phase on the basis of the plurality of second parameters by determining a sampling phase for which a second parameter of the plurality of second parameters has a maximum value and by determining the second parameter for each sampling phase of the second plurality of sampling phases on the basis of the following equation:

$$SBSPE_i = |E_i(1)||E_i(2)||E_i(3)|, \ i = 1, 2,$$

wherein,

$$E_1 = sum\left(log \cdot erfc\left(\frac{Q_1}{\sqrt{2}}\right)\right), E_2 = sum\left(log \cdot erfc\left(\frac{Q_{min}}{\sqrt{2}}\right)\right)$$

wherein,

$$Q_1 = \frac{abs(\mu(C)-\mu(\underline{C}))}{\sigma(C)+\sigma(\underline{C})} \text{ and } Q_{min} = \min(Q_2, Q_3),$$

wherein,

$$Q_2 = \frac{abs(\mu(C)-\mu(\underline{C}))}{2\sigma(C)} \text{ and } Q_3 = \frac{abs(\mu(C)-\mu(\underline{C}))}{2\sigma(\underline{C})},$$

wherein $SBSPE_i$ denotes the second parameter, $E_1$ and $E_2$ denote two alternative error event estimation functions, and $C$ and $\underline{C}$ denote vectors defining competing error events; and wherein when the digital communication signal is sampled with a sampling rate of two samples per symbol, the method comprises: estimating during the second target sampling phase estimation stage the second target sampling phase on the basis of the plurality of second parameters by determining a sampling phase for which a second parameter of the plurality of second parameters has a maximum value and by determining the second parameter for each sampling phase of the second plurality of sampling phases on the basis of the following equation:

$$SBSPE_i = \prod_{j=1}^{n}\left|E_i(p_j)\right|, i = 1, 2,$$

wherein,

$$E_1 = sum\left(log \cdot erfc\left(\frac{Q_1}{\sqrt{2}}\right)\right), E_2 = sum\left(log \cdot erfc\left(\frac{Q_{min}}{\sqrt{2}}\right)\right),$$

wherein,

$$Q_1 = \frac{abs(\mu(C)-\mu(\underline{C}))}{\sigma(C)+\sigma(\underline{C})}, \text{ and } Q_{min} = \min\left(Q_2^A, Q_3^A, Q_2^B, Q_3^B\right),$$

wherein,

$$Q_2 = \frac{abs(\mu(C)-\mu(\underline{C}))}{2\sigma(C)} \text{ and } Q_3 = \frac{abs(\mu(C)-\mu(\underline{C}))}{2\sigma(\underline{C})}$$

wherein $SBSPE_i$ denotes the second parameter, $E_1$ and $E_2$ denote two alternative error event estimation functions, and $C$ and $\underline{C}$ denote vectors defining competing error events.

**11.** A computer program comprising a program code for performing the method of claim 10 when executed on a computer.

**Patentansprüche**

**1.** Entzerrer (100) für einen Kommunikationsempfänger (200), der dafür ausgelegt ist, über einen Kommunikationskanal ein digitales Kommunikationssignal zu empfangen, wobei das digitale Kommunikationssignal mit einer Abtastphase abgetastet wird, wobei der Entzerrer (100) Folgendes umfasst:

einen Kommunikationskanal-Modellierer (101), ausgelegt zum Bereitstellen eines anpassbaren Kommunikationskanalmodells auf der Basis des digitalen Kommunikationssignals, wobei das anpassbare Kommunikationskanalmodell durch eine Vielzahl von anpassbaren Zweigmetriken definiert wird;
einen "Maximum Likelihood"-Sequenzschätzer (103), ausgelegt zum Schätzen einer Sequenz von Symbolen auf der Basis des digitalen Kommunikationssignals und der Vielzahl von Zweigmetriken;
einen Ziel-Abtastphasenschätzer (105), wobei während einer ersten Zielabtastphasen-Schätzungsstufe der Ziel-Abtastphasenschätzer (105) ausgelegt ist zum Bestimmen eines ersten Parameters für jede Abtastphase einer ersten Vielzahl von Abtastphasen auf der Basis der Vielzahl anpassbarer Zweigmetriken und zum Schätzen einer ersten Ziel-Abtastphase auf der Basis der Vielzahl von ersten Parametern; und
einen Abtastphasenjustierer (107), ausgelegt zum Justieren der Abtastphase auf die erste Zielabtastphase;
wobei der Ziel-Abtastphasenschätzer (105) ferner während einer zweiten Ziel-Abtastphasen-Schätzungsstufe ausgelegt ist zum Bestimmen eines zweiten Parameters für jede Abtastphase einer zweiten Vielzahl von Abtastphasen auf der Basis einer Vielzahl von Fehlerereignissen des "Maximum Likelihood"-Sequenzschätzers (103) und zum Schätzen einer zweiten Zielabtastphase auf der Basis der Vielzahl von zweiten Parametern, und wobei der Abtastphasenjustierer (107) ferner ausgelegt ist zum Justieren der Abtastphase auf die zweite Zielabtastphase;
wobei, wenn das digitale Kommunikationssignal mit einer Abtastrate von einem Abtastwert pro Symbol abgetastet wird, der Ziel-Abtastphasenschätzer (105) ausgelegt ist zum Schätzen der zweiten Zielabtastphase während der zweiten Ziel-Abtastphasen-Schätzungsstufe auf der Basis der Vielzahl von zweiten Parametern durch Bestimmen einer Abtastphase, für die ein zweiter Parameter der Vielzahl von zweiten Parametern einen maximalen Wert aufweist, und durch Bestimmen des zweiten Parameters für jede Abtastphase der zweiten Vielzahl von Abtastphasen auf der Basis der folgenden Gleichung:

$$SBSPE_i = |E_i(1)||E_i(2)||E_i(3)|, i = 1, 2,$$

mit

$$E_1 = sum\left(log \cdot erfc\left(\frac{Q_1}{\sqrt{2}}\right)\right), E_2 = sum\left(log \cdot erfc\left(\frac{Q_{min}}{\sqrt{2}}\right)\right)$$

mit

$$Q_1 = \frac{abs\left(\mu(C)-\mu(\underline{C})\right)}{\sigma(C)+\sigma(\underline{C})} \text{ und } Q_{min} = min(Q_2, Q_3),$$

mit

$$Q_2 = \frac{abs\left(\mu(C)-\mu(\underline{C})\right)}{2\sigma(C)} \text{ und } Q_3 = \frac{abs\left(\mu(C)-\mu(\underline{C})\right)}{2\sigma(\underline{C})},$$

wobei SBSPE$_i$ den zweiten Parameter bedeutet, E$_1$ und E$_2$ zwei alternative Fehlerereignis-Schätzungsfunktionen bedeuten und $C$ und $\underline{C}$ konkurrierende Fehlerereignisse definierende Vektoren bedeuten; und
wobei, wenn das digitale Kommunikationssignal mit einer Abtastrate von zwei Abtastwerten pro Symbol abgetastet wird, der Ziel-Abtastphasenschätzer (105) ausgelegt ist zum Schätzen der zweiten Zielabtastphase während der zweiten Ziel-Abtastphasen-Schätzungsstufe auf der Basis der Vielzahl von zweiten Parametern durch Bestimmen einer Abtastphase, für die ein zweiter Parameter der Vielzahl von zweiten Parametern einen maximalen Wert aufweist, und durch Bestimmen des zweiten Parameters für jede Abtastphase der zweiten Vielzahl von Abtastphasen auf der Basis der folgenden Gleichung:

$$SBSPE_i = \prod_{j=1}^{n}\left|E_i(p_j)\right|, i = 1, 2,$$

mit

$$E_1 = sum\left(log \cdot erfc\left(\frac{Q_1}{\sqrt{2}}\right)\right), E_2 = sum\left(log \cdot erfc\left(\frac{Q_{min}}{\sqrt{2}}\right)\right),$$

mit

$$Q_1 = \frac{abs\left(\mu(C)-\mu(\underline{C})\right)}{\sigma(C)+\sigma(\underline{C})} \text{ und } Q_{min} = min(Q_2^A, Q_3^A, Q_2^B, Q_3^B),$$

mit

$$Q_2 = \frac{abs\left(\mu(C)-\mu(\underline{C})\right)}{2\sigma(C)} \text{ und } Q_3 = \frac{abs\left(\mu(C)-\mu(\underline{C})\right)}{2\sigma(\underline{C})},$$

wobei SBSPE$_i$ den zweiten Parameter bedeutet, E$_1$ und E$_2$ zwei alternative Fehlerereignis-Schätzungsfunktionen bedeuten und $C$ und $\underline{C}$ konkurrierende Fehlerereignisse definierende Vektoren bedeuten.

2. Entzerrer (100) nach Anspruch 1, wobei jede Zweigmetrik der Vielzahl von anpassbaren Zweigmetriken, die das anpassbare Kommunikationskanalmodell definieren, durch ein Histogramm definiert wird, das mehrere Bins umfasst, wobei jedes Histogramm einer Wahrscheinlichkeitsdichtefunktion einer dem digitalen Kommunikationssignal zugeordneten Sequenz von Symbolen zugeordnet ist und wobei jedes Histogramm einen Mittelwert $\mu_i$ und eine Standardabweichung $\sigma_i$ definiert.

3. Entzerrer (100) nach Anspruch 2, wobei das digitale Kommunikationssignal mit einer Abtastrate von einem Abtastwert pro Symbol abgetastet wird und wobei der Ziel-Abtastphasenschätzer (105) ausgelegt ist zum Schätzen der ersten Zielabtastphase während der ersten Ziel-Abtastphasen-Schätzungsstufe auf der Basis der Vielzahl von ersten Parametern durch Bestimmen einer Abtastphase, für die ein erster Parameter der Vielzahl von ersten Parametern einen maximalen Wert aufweist, und durch Bestimmen des ersten Parameters für jede Abtastphase der ersten Vielzahl von Abtastphasen auf der Basis der folgenden Gleichung:

$$BSPE^1 = BSPE^A = \frac{\sigma_\mu^2(H_{01}^A)}{\sigma^2(H_1^A)}(aK_1^A + bK_2^A), 0 \le a, b \le 1,$$

mit

$$K_1^A = \overline{\mu(H_{11}^A)} - \overline{\mu(H_{00}^A)}, K_2^A = \overline{\mu(H_1^A)} - \overline{\mu(H_0^A)} \text{ und } \sigma_\mu^2 = \frac{1}{2L}\sum_{i=1}^{2L}(\mu_i - \overline{\mu})^2$$

und wobei BSPE[1] den ersten Parameter bedeutet, $\sigma_\mu^2$ die Varianz der Mittelwerte $\mu_i$ der Vielzahl von Histogrammen, die die Vielzahl von anpassbaren Zweigmetriken definieren, bedeutet, L die Anzahl der Zustände des "Maximum Likelihood"-Sequenzschätzers (103) bedeutet und wobei $H_1$, $H_0$, $H_{11}$, $H_{00}$ und Hoi eine Metrikmenge definieren, mit $H_1$ alle Zweige, die 1 decodieren, $H_0$ alle Zweige, die 0 decodieren, $H_{11}$ alle Zweige mit drei Einsen in der Mitte, $H_{00}$ alle Zweige mit drei Nullen in der Mitte und Hoi alle Zweige mit drei Nullen oder drei Einsen in der Mitte.

4. Entzerrer (100) nach Anspruch 2, wobei das digitale Kommunikationssignal mit einer Abtastrate von zwei Abtastwerten pro Symbol abgetastet wird und wobei der Ziel-Abtastphasenschätzer (105) ausgelegt ist zum Schätzen der ersten Zielabtastphase während der ersten Ziel-Abtastphasen-Schätzungsstufe auf der Basis der Vielzahl von ersten Parametern durch Bestimmen einer Abtastphase, für die ein erster Parameter der Vielzahl von ersten Parametern einen maximalen Wert aufweist, und durch Bestimmen des ersten Parameters für jede Abtastphase der ersten Vielzahl von Abtastphasen auf der Basis der folgenden Gleichung:

$$BSPE^2 = BSPE^{A,B} = \frac{\sigma_{\mu,A}^2 + \sigma_{\mu,B}^2}{\sigma_A^2 + \sigma_B^2}\left(a(K_1^A + K_1^B) + b(K_2^A + K_2^B)\right), 0 \le a, b \le 1,$$

mit

$$K_1^W = \overline{\mu(H_{11}^W)} - \overline{\mu(H_{00}^W)}, K_2^W = \overline{\mu(H_1^W)} - \overline{\mu(H_0^W)}, W = A, B$$

und

$$\sigma_\mu^2 = \frac{1}{2L}\sum_{i=1}^{2L}(\mu_i - \overline{\mu})^2$$

und

wobei BSPE[2] den ersten Parameter bedeutet, $\sigma_{\mu,A}^2$ die Varianz der Mittelwerte $\mu_i$ der Vielzahl von Histogrammen, die die Vielzahl von anpassbaren Zweigmetriken für die Abtastwerte A definieren, bedeutet, $\sigma_{\mu,B}^2$ die Varianz der Mittelwerte $\mu_i$ der Vielzahl von Histogrammen, die die Vielzahl von anpassbaren Zweigmetriken für die Abtastwerte B definieren, bedeutet, L die Anzahl der Zustände des "Maximum Likelihood"-Sequenzschätzers (103) bedeutet und wobei $H_1$, $H_0$, $H_{11}$, $H_{00}$ und Hoi eine Metrikmenge definieren, mit $H_1$ alle Zweige, die 1 decodieren, $H_0$ alle Zweige, die 0 decodieren, $H_{11}$ alle Zweige mit drei Einsen in der Mitte, $H_{00}$ alle Zweige mit drei Nullen in der Mitte und Hoi alle Zweige mit drei Nullen oder drei Einsen in der Mitte.

5. Entzerrer (100) nach einem der vorhergehenden Ansprüche, wobei der Ziel-Abtastphasenschätzer (105) ausgelegt ist zum Bestimmen des ersten Parameters für jede Abtastphase der ersten Vielzahl von Abtastphasen auf der Basis der Vielzahl von anpassbaren Zweigmetriken unter Verwendung desselben Kommunikationskanalmodells.

6. Entzerrer (100) nach einem der vorhergehenden Ansprüche, wobei der Entzerrer (100) einen Interpolator umfasst, der dafür ausgelegt ist, das digitale Kommunikationssignal zwischen Abtastpunkten zu interpolieren.

7. Entzerrer (100) nach einem der vorhergehenden Ansprüche, wobei die Abtastphasen der zweiten Vielzahl von Abtastphasen in der Umgebung der ersten Zielabtastphase angeordnet sind und wobei die Differenz zwischen jeder Abtastphase der zweiten Vielzahl von Abtastphasen und der ersten Zielabtastphase kleiner als eine Abtastphasen-Differenzschwelle ist.

8. Entzerrer (100) nach einem der vorhergehenden Ansprüche, wobei der Ziel-Abtastphasenschätzer (105) ausgelegt ist zum Schätzen der zweiten Zielabtastphase auf der Basis einer Vielzahl von Fehlerereignissen des "Maximum Likelihood"-Sequenzschätzers mit einer Fehlerwahrscheinlichkeit von mehr als einer vordefinierten Wahrscheinlichkeitsschwelle.

9. Entzerrer (100) nach einem der vorhergehenden Ansprüche, wobei die Vielzahl von Fehlerereignissen Einzelfehlerereignisse, Doppelfehlerereignisse und/oder Dreifachfehlerereignisse umfasst.

10. Verfahren (300) zum Betrieb eines Entzerrers für einen Kommunikationsempfänger, der dafür ausgelegt ist, über einen Kommunikationskanal ein digitales Kommunikationssignal zu empfangen, wobei das digitale Kommunikationssignal mit einer Abtastphase abgetastet wird, wobei das Verfahren die folgenden Schritte umfasst:

Bereitstellen (303) eines anpassbaren Kommunikationskanalmodells auf der Basis des digitalen Kommunikationssignals, wobei das anpassbare Kommunikationskanalmodell durch eine Vielzahl von anpassbaren Zweigmetriken definiert wird;

Schätzen (305) einer wahrscheinlichsten Sequenz von Symbolen auf der Basis des digitalen Kommunikationssignals und der Vielzahl von Zweigmetriken;

Bestimmen (307) eines ersten Parameters für jede Abtastphase einer ersten Vielzahl von Abtastphasen auf der Basis der Vielzahl von anpassbaren Zweigmetriken und Schätzen einer ersten Zielabtastphase auf der Basis der Vielzahl von ersten Parametern, während einer ersten Ziel-Abtastphasen-Schätzungsstufe; und

Justieren (309) der Abtastphase auf die erste Zielabtastphase;

wobei das Verfahren nach dem Schritt (309) des Justierens der Abtastphase auf die erste Zielabtastphase die folgenden weiteren Schritte umfasst:

Bestimmen eines zweiten Parameters für jede Abtastphase einer zweiten Vielzahl von Abtastphasen auf der Basis einer Vielzahl von Fehlerereignissen des "Maximum Likelihood"-Sequenzschätzers und Schätzen einer zweiten Zielabtastphase auf der Basis der Vielzahl von zweiten Parametern, während einer zweiten Ziel-Abtastphasen-Schätzungsstufe und

Justieren der Abtastphase auf die zweite Zielabtastphase;

wobei, wenn das digitale Kommunikationssignal mit einer Abtastrate von einem Abtastwert pro Symbol abgetastet wird, das Verfahren Folgendes umfasst:

Schätzen der zweiten Zielabtastphase während der zweiten Ziel-Abtastphasen-Schätzungsstufe auf der Basis der Vielzahl von zweiten Parametern durch Bestimmen einer Abtastphase, für die ein zweiter Parameter der Vielzahl von zweiten Parametern einen maximalen Wert aufweist, und durch Bestimmen des zweiten Parameters für jede Abtastphase der zweiten Vielzahl von Abtastphasen auf der Basis der folgenden Gleichung:

$$SBSPE_i = |E_i(1)||E_i(2)||E_i(3)|, i = 1, 2,$$

mit

$$E_1 = sum\left(log \cdot erfc\left(\frac{Q_1}{\sqrt{2}}\right)\right), E_2 = sum\left(log \cdot erfc\left(\frac{Q_{min}}{\sqrt{2}}\right)\right)$$

mit

$$Q_1 = \frac{abs\big(\mu(C)-\mu(\underline{C})\big)}{\sigma(C)+\sigma(\underline{C})} \text{ und } Q_{min} = min(Q_2, Q_3),$$

mit

$$Q_2 = \frac{abs\big(\mu(C)-\mu(\underline{C})\big)}{2\sigma(C)} \text{ und } Q_3 = \frac{abs\big(\mu(C)-\mu(\underline{C})\big)}{2\sigma(\underline{C})},$$

wobei $SBSPE_i$ den zweiten Parameter bedeutet, $E_1$ und $E_2$ zwei alternative Fehlerereignis-Schätzungsfunktionen bedeuten und $C$ und $\underline{C}$ konkurrierende Fehlerereignisse definierende Vektoren bedeuten; und
wobei, wenn das digitale Kommunikationssignal mit einer Abtastrate von zwei Abtastwerten pro Symbol abgetastet wird, das Verfahren Folgendes umfasst:
Schätzen der zweiten Zielabtastphase während der zweiten Ziel-Abtastphasen-Schätzungsstufe auf der Basis der Vielzahl von zweiten Parametern durch Bestimmen einer Abtastphase, für die ein zweiter Parameter der Vielzahl von zweiten Parametern einen maximalen Wert aufweist, und durch Bestimmen des zweiten Parameters für jede Abtastphase der zweiten Vielzahl von Abtastphasen auf der Basis der folgenden Gleichung:

$$SBSPE_i = \prod_{j=1}^{n}\big|E_i\big(p_j\big)\big|, i = 1, 2,$$

mit

$$E_1 = sum\left(log \cdot erfc\left(\frac{Q_1}{\sqrt{2}}\right)\right), E_2 = sum\left(log \cdot erfc\left(\frac{Q_{min}}{\sqrt{2}}\right)\right),$$

mit

$$Q_1 = \frac{abs\big(\mu(C)-\mu(\underline{C})\big)}{\sigma(C)+\sigma(\underline{C})} \text{ und } Q_{min} = min(Q_2^A, Q_3^A, Q_2^B, Q_3^B),$$

mit

$$Q_2 = \frac{abs\big(\mu(C)-\mu(\underline{C})\big)}{2\sigma(C)} \text{ und } Q_3 = \frac{abs\big(\mu(C)-\mu(\underline{C})\big)}{2\sigma(\underline{C})},$$

wobei $SBSPE_i$ den zweiten Parameter bedeutet, $E_1$ und $E_2$ zwei alternative Fehlerereignis-Schätzungsfunktionen bedeuten und $C$ und $\underline{C}$ konkurrierende Fehlerereignisse definierende Vektoren bedeuten.

11. Computerprogramm, das Programmcode zum Ausführen des Verfahrens nach Anspruch 10, wenn es auf einem Computer ausgeführt wird, umfasst.

## Revendications

1. Égaliseur (100) pour un récepteur de communication (200) configuré pour recevoir un signal de communication numérique sur un canal de communication, le signal de communication numérique étant échantillonné avec une phase d'échantillonnage, l'égaliseur (100) comprenant :

   un modéliseur de canal de communication (101) configuré pour fournir un modèle de canal de communication adaptable sur la base du signal de communication numérique, le modèle de canal de communication adaptable étant défini par une pluralité d'indicateurs métriques de branche adaptables ;
   un estimateur de séquence probable maximale (103) configuré pour estimer une séquence de symboles sur la base du signal de communication numérique et de la pluralité d'indicateurs métriques de branche ;

un estimateur de phase d'échantillonnage cible (105), l'estimateur de phase d'échantillonnage cible (105) étant configuré, pendant un premier stade d'évaluation de phase d'échantillonnage cible, pour déterminer, pour chaque phase d'échantillonnage d'une première pluralité de phases d'échantillonnage, un premier paramètre sur la base de la pluralité d'indicateurs métriques de branche adaptables et pour estimer une première phase d'échantillonnage cible sur la base de la pluralité de premiers paramètres ; et

un régleur de phase d'échantillonnage (107) configuré pour régler la phase d'échantillonnage sur la première phase d'échantillonnage cible ;

l'estimateur de phase d'échantillonnage cible (105) étant en outre configuré, pendant un second stade d'estimation de phase d'échantillonnage cible, pour déterminer, pour chaque phase d'échantillonnage d'une seconde pluralité de phases d'échantillonnage, un second paramètre sur la base d'une pluralité d'événements d'erreur de l'estimateur de séquence probable maximale (103) et pour estimer une seconde phase d'échantillonnage cible sur la base de la pluralité de seconds paramètres, et le régleur de phase d'échantillonnage (107) étant en outre configuré pour régler la phase d'échantillonnage sur la seconde phase d'échantillonnage cible ;

quand le signal de communication numérique est échantillonné avec un taux d'échantillonnage d'un échantillon par symbole, l'estimateur de phase d'échantillonnage cible (105) étant configuré pour estimer, pendant le second stade d'estimation de phase d'échantillonnage cible, la seconde phase d'échantillonnage cible sur la base de la pluralité de seconds paramètres en déterminant une phase d'échantillonnage pour laquelle un second paramètre de la pluralité de seconds paramètres a une valeur maximale et en déterminant le second paramètre pour chaque phase d'échantillonnage de la seconde pluralité de phases d'échantillonnage sur la base de l'équation suivante :

$$SBSPE_i = |E_i(1)||E_i(2)||E_i(3)|, i = 1, 2,$$

où

$$E_1 = sum\left(log \cdot erfc\left(\frac{Q_1}{\sqrt{2}}\right)\right), E_2 = sum\left(log \cdot erfc\left(\frac{Q_{min}}{\sqrt{2}}\right)\right),$$

où

$$Q_1 = \frac{abs\left(\mu(C) - \mu(\underline{C})\right)}{\sigma(C) + \sigma(\underline{C})} \text{ et } Q_{min} = min(Q_2, Q_3),$$

où

$$Q_2 = \frac{abs\left(\mu(C) - \mu(\underline{C})\right)}{2\sigma(C)} \text{ et } Q_3 = \frac{abs\left(\mu(C) - \mu(\underline{C})\right)}{2\sigma(\underline{C})},$$

où $SBSPE_i$ désigne le second paramètre, E1 et E2 désignent deux fonctions alternatives d'estimation d'événement d'erreur, et C et $\underline{C}$ désignent des vecteurs définissant des événements d'erreur concurrents ; et

quand le signal de communication numérique est échantillonné avec un taux d'échantillonnage de deux échantillons par symbole, l'estimateur de phase d'échantillonnage cible (105) étant configuré pour estimer, pendant le second stade d'estimation de phase d'échantillonnage cible, la seconde phase d'échantillonnage cible sur la base de la pluralité de seconds paramètres en déterminant une phase d'échantillonnage pour laquelle un second paramètre de la pluralité de seconds paramètres a une valeur maximale et en déterminant le second paramètre pour chaque phase d'échantillonnage de la seconde pluralité de phases d'échantillonnage sur la base de l'équation suivante :

$$SBSPE_i = \prod_{j=1}^{n}|E_i(p_j)|, i = 1, 2,$$

où

$$E_1 = sum\left(log \cdot erfc\left(\tfrac{Q_1}{\sqrt{2}}\right)\right), E_2 = sum\left(log \cdot erfc\left(\tfrac{Q_{min}}{\sqrt{2}}\right)\right),$$

où

$$Q_1 = \frac{abs\left(\mu(C)-\mu(\underline{C})\right)}{\sigma(C)+\sigma(\underline{C})} \text{ et } Q_{min} = min(Q_2^A, Q_3^A, Q_2^B, Q_3^B),$$

où

$$Q_2 = \frac{abs\left(\mu(C)-\mu(\underline{C})\right)}{2\sigma(C)} \text{ et } Q_3 = \frac{abs\left(\mu(C)-\mu(\underline{C})\right)}{2\sigma(\underline{C})},$$

où $SBSPE_i$ désigne le second paramètre, E1 et E2 désignent deux fonctions alternatives d'estimation d'événement d'erreur, et C et $\underline{C}$ désignent des vecteurs définissant des événements d'erreur concurrents.

2. Égaliseur (100) selon la revendication 1, dans lequel chaque indicateur métrique de branche de la pluralité d'indicateurs métriques de branche adaptables définissant le modèle de canal de communication adaptable est défini par un histogramme comprenant une pluralité de casiers, chaque histogramme étant associé à une fonction de densité de probabilité d'une séquence de symboles associés au signal de communication numérique et chaque histogramme définissant une valeur moyenne $\mu i$ et un écart-type $\sigma i$.

3. Égaliseur (100) selon la revendication 2, dans lequel le signal de communication numérique est échantillonné avec un taux d'échantillonnage d'un échantillon par symbole et dans lequel l'estimateur de phase d'échantillonnage cible (105) est configuré pour estimer, pendant le premier stade d'estimation de phase d'échantillonnage cible, la première phase d'échantillonnage cible sur la base de la pluralité de premiers paramètres en déterminant une phase d'échantillonnage pour laquelle un premier paramètre de la pluralité de premiers paramètres a une valeur maximale et en déterminant le premier paramètre pour chaque phase d'échantillonnage de la première pluralité de phases d'échantillonnage sur la base de l'équation suivante :

$$BSPE^1 = BSPE^A = \frac{\sigma_\mu^2(H_{01}^A)}{\sigma^2(H_1^A)}(aK_1^A + bK_2^A), 0 \leq a, b \leq 1,$$

où

$$K_1^A = \overline{\mu(H_{11}^A)} - \overline{\mu(H_{00}^A)}, K_2^A = \overline{\mu(H_1^A)} - \overline{\mu(H_0^A)} \text{ et } \sigma_\mu^2 = \frac{1}{2L}\sum_{i=1}^{2L}(u_i - \overline{u})^2,$$

et

où $BSPE^1$ désigne le premier paramètre, $\sigma_\mu^2$ désigne la variance des valeurs moyennes $\mu i$ de la pluralité d'histogrammes définissant la pluralité d'indicateurs métriques de branche adaptables, L désigne le nombre d'états de l'estimateur de séquence probable maximale (103), et où H1, H0, H11, H00 et H01 définissent un ensemble d'indicateurs métriques avec H1 désignant toutes les branches décodant 1, H0 désignant toutes les branches décodant 0, H11 désignant toutes les branches avec trois uns au milieu, H00 désignant toutes les branches avec trois zéros au milieu et H01 désignant toutes les branches avec trois zéros ou trois uns au milieu.

4. Égaliseur (100) selon la revendication 2, dans lequel le signal de communication numérique est échantillonné avec un taux d'échantillonnage de deux échantillons par symbole et dans lequel l'estimateur de phase d'échantillonnage cible (105) est configuré pour estimer, pendant le premier stade d'estimation de phase d'échantillonnage cible, la première phase d'échantillonnage cible sur la base de la pluralité de premiers paramètres en déterminant une phase d'échantillonnage pour laquelle un premier paramètre de la pluralité de premiers paramètres a une valeur maximale et en déterminant le premier paramètre pour chaque phase d'échantillonnage de la première pluralité de phases d'échantillonnage sur la base de l'équation suivante :

$$BSPE^2 = BSPE^{A,B} = \frac{\sigma_{\mu,A}^2 + \sigma_{\mu,B}^2}{\sigma_A^2 + \sigma_B^2}\left(a(K_1^A + K_1^B) + b(K_2^A + K_2^B)\right), 0 \le a, b \le 1,$$

où

$$K_1^W = \overline{\mu(H_{11}^W)} - \overline{\mu(H_{00}^W)}, \quad K_2^W = \overline{\mu(H_1^W)} - \overline{\mu(H_0^W)}, \quad W = A, B \quad \text{et} \quad \sigma_\mu^2 =$$

$$\frac{1}{2L}\sum_{i=1}^{2L}(u_i - \overline{u})^2,$$

et

où $BSPE^2$ désigne le premier paramètre, $\sigma_{\mu,A}^2$ désigne la variance des valeurs moyennes $\mu_i$ de la pluralité d'histogrammes définissant la pluralité d'indicateurs métriques de branche adaptables pour les échantillons A, $\sigma_{\mu,B}^2$ désigne la variance des valeurs moyennes $\mu_i$ de la pluralité d'histogrammes définissant la pluralité d'indicateurs métriques de branche adaptables pour les échantillons B, L désigne le nombre d'états de l'estimateur de séquence probable maximale (103), et où H1, H0, H11, H00 et H01 définissent un ensemble d'indicateurs métriques avec H1 désignant toutes les branches décodant 1, H0 désignant toutes les branches décodant 0, H11 désignant toutes les branches avec trois uns au milieu, H00 désignant toutes les branches avec trois zéros au milieu et H01 désignant toutes les branches avec trois zéros ou trois uns au milieu.

5. Égaliseur (100) selon l'une quelconque des revendications précédentes, dans lequel l'estimateur de phase d'échantillonnage cible (105) est configuré pour déterminer, pour chaque phase d'échantillonnage de la première pluralité de phases d'échantillonnage, le premier paramètre sur la base de la pluralité d'indicateurs métriques de branche adaptables au moyen du même modèle de canal de communication.

6. Égaliseur (100) selon l'une quelconque des revendications précédentes, l'égaliseur (100) comprenant un interpolateur configuré pour interpoler le signal de communication numérique entre des points d'échantillonnage.

7. Égaliseur (100) selon l'une quelconque des revendications précédentes, dans lequel les phases d'échantillonnage de la seconde pluralité de phases d'échantillonnage sont situées au voisinage de la première phase d'échantillonnage cible et dans lequel la différence entre chaque phase d'échantillonnage de la seconde pluralité de phases d'échantillonnage et la première phase d'échantillonnage cible est inférieure à un seuil de différence de phase d'échantillonnage.

8. Égaliseur (100) selon l'une quelconque des revendications précédentes, dans lequel l'estimateur de phase d'échantillonnage cible (105) est configuré pour estimer la seconde phase d'échantillonnage cible sur la base d'une pluralité d'événements d'erreur de l'estimateur de séquence probable maximale ayant une probabilité d'erreur supérieure à un seuil de probabilité prédéfini.

9. Égaliseur (100) selon l'une quelconque des revendications précédentes, dans lequel la pluralité d'événements d'erreur comprennent des événements d'erreur simples, des événements d'erreur doubles et/ou des événements d'erreur triples.

10. Procédé (300) de fonctionnement d'un égaliseur pour un récepteur de communication configuré pour recevoir un signal de communication numérique sur un canal de communication, le signal de communication numérique étant échantillonné avec une phase d'échantillonnage, le procédé comprenant les étapes consistant à :

fournir (303) un modèle de canal de communication adaptable sur la base du signal de communication numérique, le modèle de canal de communication adaptable étant défini par une pluralité d'indicateurs métriques de branche adaptables ;
estimer (305) une séquence la plus probable de symboles sur la base du signal de communication numérique et de la pluralité d'indicateurs métriques de branche ;
pendant un premier stade d'estimation de phase d'échantillonnage cible, déterminer (307), pour chaque phase d'échantillonnage d'une première pluralité de phases d'échantillonnage, un premier paramètre sur la base de la pluralité d'indicateurs métriques de branche adaptables et estimer une première phase d'échantillonnage cible sur la base de la pluralité de premiers paramètres ; et
régler (309) la phase d'échantillonnage sur la première phase d'échantillonnage cible ;
le procédé comprenant, après l'étape (309) consistant à régler la phase d'échantillonnage sur la première phase d'échantillonnage cible, les autres étapes consistant à :

pendant un second stade d'estimation de phase d'échantillonnage cible, déterminer, pour chaque phase d'échantillonnage d'une seconde pluralité de phases d'échantillonnage, un second paramètre sur la base d'une pluralité d'événements d'erreur de l'estimateur de séquence probable maximale et estimer une seconde phase d'échantillonnage cible sur la base de la pluralité de seconds paramètres, et
régler la phase d'échantillonnage sur la seconde phase d'échantillonnage cible ;

quand le signal de communication numérique est échantillonné avec un taux d'échantillonnage d'un échantillon par symbole, le procédé comprenant l'étape consistant à :
estimer, pendant le second stade d'estimation de phase d'échantillonnage cible, la seconde phase d'échantillonnage cible sur la base de la pluralité de seconds paramètres en déterminant une phase d'échantillonnage pour laquelle un second paramètre de la pluralité de seconds paramètres a une valeur maximale et en déterminant le second paramètre pour chaque phase d'échantillonnage de la seconde pluralité de phases d'échantillonnage sur la base de l'équation suivante :

$$SBSPE_i = |E_i(1)||E_i(2)||E_i(3)|, i = 1, 2,$$

où

$$E_1 = sum\left(log \cdot erfc\left(\frac{Q_1}{\sqrt{2}}\right)\right), E_2 = sum\left(log \cdot erfc\left(\frac{Q_{min}}{\sqrt{2}}\right)\right),$$

où

$$Q_1 = \frac{abs\left(\mu(C)-\mu(\underline{C})\right)}{\sigma(C)+\sigma(\underline{C})} \text{ et } Q_{min} = min(Q_2, Q_3),$$

où

$$Q_2 = \frac{abs\left(\mu(C)-\mu(\underline{C})\right)}{2\sigma(C)} \text{ et } Q_3 = \frac{abs\left(\mu(C)-\mu(\underline{C})\right)}{2\sigma(\underline{C})},$$

où $SBSPE_i$ désigne le second paramètre, E1 et E2 désignent deux fonctions alternatives d'estimation d'événement d'erreur, et C et $\underline{C}$ désignent des vecteurs définissant des événements d'erreur concurrents ; et
quand le signal de communication numérique est échantillonné avec un taux d'échantillonnage de deux échantillons par symbole, le procédé comprenant l'étape consistant à :
estimer, pendant le second stade d'estimation de phase d'échantillonnage cible, la seconde phase d'échantillonnage cible sur la base de la pluralité de seconds paramètres en déterminant une phase d'échantillonnage pour laquelle un second paramètre de la pluralité de seconds paramètres a une valeur maximale et en déterminant le second paramètre pour chaque phase d'échantillonnage de la seconde pluralité de phases d'échantillonnage sur la base de l'équation suivante :

$$SBSPE_i = \prod_{j=1}^{n}\left|E_i(p_j)\right|, i = 1, 2,$$

où

$$E_1 = sum\left(log \cdot erfc\left(\frac{Q_1}{\sqrt{2}}\right)\right), E_2 = sum\left(log \cdot erfc\left(\frac{Q_{min}}{\sqrt{2}}\right)\right),$$

où

$$Q_1 = \frac{abs\left(\mu(C)-\mu(\underline{C})\right)}{\sigma(C)+\sigma(\underline{C})} \text{ et } Q_{min} = min(Q_2^A, Q_3^A, Q_2^B, Q_3^B),$$

où

$$Q_2 = \frac{abs\left(\mu(C)-\mu(\underline{C})\right)}{2\sigma(C)} \text{ et } Q_3 = \frac{abs\left(\mu(C)-\mu(\underline{C})\right)}{2\sigma(\underline{C})},$$

où SBSPE$_i$ désigne le second paramètre, E1 et E2 désignent deux fonctions alternatives d'estimation d'événement d'erreur, et C et $\underline{C}$ désignent des vecteurs définissant des événements d'erreur concurrents.

**11.** Programme informatique comprenant un code de programme permettant, lorsqu'il est exécuté sur un ordinateur, de réaliser le procédé selon la revendication 10.

**Fig. 1**

EP 3 338 382 B1

**Fig. 2**

Fig. 3

EP 3 338 382 B1

16-state MLSE

| $A_1$ | $B_1$ | $A_2$ | $B_2$ | $A_3$ | $B_3$ | $A_4$ | $B_4$ | ... | $A_{K-3}$ | $B_{K-3}$ | $A_{K-2}$ | $B_{K-2}$ | $A_{K-1}$ | $B_{K-1}$ | $A_K$ | $B_K$ |

| $b_1$ | $b_2$ | $b_3$ | $b_4$ | ... | $b_{K-3}$ | $b_{K-2}$ | $b_{K-1}$ | $b_K$ |

**Fig. 4**

EP 3 338 382 B1

sample sequence

16-state MLSE

| $A_1$ | $B_1$ | $A_2$ | $B_2$ | $A_3$ | $B_3$ | $A_4$ | $B_4$ | $A_5$ | $B_5$ | ... | $A_{K-3}$ | $B_{K-3}$ | $A_{K-2}$ | $B_{K-2}$ | $A_{K-1}$ | $B_{K-1}$ | $A_K$ | $B_K$ |

bin value $k$

bin value $j$

CTA

| $c_{0,1}^A$ | $c_{0,1}^A$ | | | | $c_{0,2^N-1}^A$ |
|---|---|---|---|---|---|
| $c_{1,0}^A$ | $c_{1,1}^A$ | | | | |
| | | | | | |
| | | | $c_{i,j}^A$ | | |
| | | | | | |
| | | | | | |
| | | | | | |
| $c_{2^{M+1}-1,0}^A$ | | | | | $c_{2^{M+1}-1,2^N-1}^A$ |

CTB

| $c_{0,1}^B$ | $c_{0,1}^B$ | | | | $c_{0,2^N-1}^B$ |
|---|---|---|---|---|---|
| $c_{1,0}^B$ | $c_{1,1}^B$ | | | | |
| | | | | | |
| | | | $c_{i,j}^B$ | | |
| | | | | | |
| | | | | | |
| | | | | | |
| $c_{2^{M+1}-1,0}^B$ | | | | | $c_{2^{M+1}-1,2^N-1}^B$ |

branch address $i$

new value      $c_{i,j}^A = c_{i,j}^A + 1$

new value      $c_{i,j}^B = c_{i,j}^B + 1$

branch address $i$

bit sequence

| $b_1$ | $b_2$ | $b_3$ | $b_4$ | $b_5$ | ... | $b_{K-3}$ | $b_{K-2}$ | $b_{K-1}$ | $b_K$ |

**Fig. 5**

Fig. 6

BSPE

sampling phase (UI)

BER

sampling phase (UI)

**Fig. 7**

Blocks of M1 bits and 2M1 samples are processed

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110305270 A